# EUROPÄISCHE PATENTSCHRIFT

(11) **EP 4 341 500 B1**
(45) Veröffentlichungstag und Bekanntmachung des Hinweises auf die Patenterteilung: **01.01.2025**
(21) Anmeldenummer: 22729070.7
(22) Anmeldetag: 11.05.2022
(51) Int. Cl.: E03C 1/04, E03C 1/05, G06F 3/0362

(54) **SANITÄR-EINRICHTUNG**
SANITARY DEVICE
DISPOSITIF SANITAIRE

(30) Priorität: 20.05.2021 DE 102021113089
(43) Veröffentlichungstag der Anmeldung: 27.03.2024
(73) Patentinhaber: Jomoo Kitchen & Bath Deutschland GmbH, 80807 Munich (DE)
(72) Erfinder: DÜCK, Johann, 82256 Fürstenfeldbruck (DE); KREUZER, Fabian, 80802 München (DE); RICHTER, Thomas, 81667 München (DE); MOHRICH, Benjamin, 80636 München (DE); GEMMECKE, Daniel, 80803 München (DE); HONG, Muya, 80339 München (DE); XIAOWEI, Lin, Xiamen, Fujian 361006 (CN)
(74) Vertreter: Grättinger Möhring von Poschinger Patentanwälte Partnerschaft mbB
(86) Internationale Anmeldenummer: PCT/EP2022/062728
(87) Internationale Veröffentlichungsnummer: WO 2022/243123

(56) Entgegenhaltungen:
- EP-A1- 3 406 809
- WO-A1-2008/130349
- WO-A1-2014/140134
- WO-A2-2007/059051

## Beschreibung

Die vorliegende Erfindung betrifft eine Sanitär-Einrichtung mit einem Kaltwasser-Zulauf, einem Warmwasser-Zulauf, mindestens einem Wasser-Auslass und einer Dosier- und Mischventileinheit, welche zur Beeinflussung des Gesamtdurchflusses durch den Wasser-Auslass und des Verhältnisses der Kaltwasser-Teilmenge und der Warmwasser-Teilmenge zueinander an dem Gesamtdurchfluss geeignet ist, wobei auf die Dosier- und Mischventileinheit eine programmierbare elektronische Steuereinheit einwirkt. Insbesondere betrifft die vorliegende Erfindung eine vorstehend angegebene Sanitär-Einrichtung, welche sich weitergehend durch die im Oberbegriff des Anspruchs 1 angegebenen Merkmale auszeichnet.

Als im vorstehenden Sinne programmgesteuerte Sanitäreinrichtungen sind in der Patentliteratur (vgl. beispielsweise DE 197 02 358 A1, EP 3 705 642 A1, US 2017/0350103 A1, EP 3 088 613 A1, US 9,085,881 B2, US Re. 35,018 E, US 4,563,780 A, US 4,756,030 A, DE 10 2016 104 793 B4, US 10,745,893 B2 und EP 2 649 246 B1) insbesondere Duschen offenbart. Dabei umfasst die elektronische Steuereinheit einen zur abrufbaren Hinterlegung mehrerer unterschiedlicher Wasserabgabeprogramme (Duschprogramme) geeigneten Programmspeicher und eine zentrale Datenverarbeitungseinheit, welche auf mindestens einen die Dosier- und Mischventileinheit betätigenden Aktuator einwirkt. Die Auswahl des jeweils durchzuführenden Duschprogramms soll dabei manuell oder teil- bzw. vollautomatisch (z. B. unter Einbindung einer automatischen Benutzer-Identitätserkennung oder Benutzer-Zustandserkennung) erfolgen können. Spezielle der Bedienung der Sanitär-Einrichtung bzw. der dieser zugeordneten elektronischen Steuereinheit dienende Benutzerschnittstellen sind ebenfalls Gegenstand der Patentliteratur (vgl. beispielsweise US 2008/0259056 A1, US 2013/0170839 A1, US 2015/0218784 A1 und WO 2011/094455 A1) .

Die US 8,028,355 B2 offenbart ein für Badezimmer bestimmtes integriertes Elektronik-System mit einer Mehrzahl von Sensoren, welche Zustandsgrößen des Badezimmers erfassen und zugeordnete Signale an eine Steuereinheit kommunizieren. An das System können unterschiedliche Sanitäreinheiten angeschlossen wie Dusche, Badewanne, Waschbecken, etc. sein, denen Benutzerschnittstellen mit einem Speicher für benutzerdefiniert hinterlegte Vorgaben und der Programmauswahl und -anpassung dienende Bedienelemente zugeordnet sind.

Aus der EP 2 104 772 B1 sind eine Multifunktionsarmatur und ein eine solche Multifunktionsarmatur umfassendes Sanitärsystem bekannt. Die Multifunktionsarmatur umfasst eine Fluid-Auslaufarmatur, eine Bedienungseinrichtung mit mehrerer verteilt angeordneten Sensoren und/oder Schaltern zur Bedienung der Multifunktionsarmatur und eine Anzeige mit mindestens einem Anzeigeelement, das einem der Sensoren bzw. Schalter räumlich zugeordnet ist. Mehrere solcher Anzeigeelemente sind dabei zu einem Anzeigering verbunden.

Die WO 2007/059051 A2 offenbart eine Sanitär-Einrichtung der gattungsgemäßen, im Oberbegriff des Anspruchs 1 angegebenen Art. Dabei ist eine Benutzerschnittstelle vorgesehen, bei der mittels des verdrehbaren Einstellringes, welcher sich um das Display herum erstreckt, die auf dem Display angezeigte Temperatur des abgegebenen Wassers einstellbar ist. Weiterhin ist ein Schiebeschalter vorgesehen, mittels dessen die Art der Wasserabgabe (kein Durchfluss, Durchfluss an, automatischer Durchfluss, niedriger Durchfluss, gepulster Durchfluss) ausgewählt werden kann. Ferner sind Tasten zur Abspeicherung eines individuellen Wasserabgabeprogramms (z. B. Wassertemperatur, Durchfluss, mögliche Massage, Auslass-Auswahl) vorgesehen, mittels derer sich das betreffende abgespeicherte Programm später erneut aufrufen lässt.

Aus der WO 2014/140134 A1 ist eine als Auslaufarmatur ausgebildete Küchenarmatur bekannt. Die zur Bedienung der Armatur vorgesehene, an dieser selbst positionierte Benutzerschnittstelle umfasst einen berührungslosen Ein/Aus-Schalter, einen Durchflusssteller und einen Temperatursteller für das gezapfte Wasser sowie Wählschalter für weitere Fluide wie beispielsweise Geschirrspülmittel. Die verschiedenen Bedienelemente sind dabei um ein Display, auf welchem die Wasserabgabe-Temperatur angezeigt ist, herum angeordnet.

Eine weitere, menügesteuerte Benutzerschnittstelle für eine Sanitär-Einrichtung ist aus der WO 2008/130349 A1 bekannt. Sie umfasst einen Ein/Aus-Schalter, Schalter zur Auswahl voreingestellter Wasserabgabe- und Umgebungsprogramme (d. h. Beleuchtungs- und/oder Audioprogramme), ein alphanumerisches Display und einen um einen Sockel herum drehbaren Einstellring. Letzterer dient, je nach gewählter Menüebene, der Selektion eines bestimmten in dem Display angezeigten Wasserauslasses, eines bestimmten, in dem Display angezeigten Betriebsmodus' oder der Wasserabgabe-Temperatur, wobei die Bestätigung mittels eines in dem Sockel angeordneten Schalters erfolgt.

Auch die EP 3 406 809 A1 offenbart eine elektronische Benutzerschnittstelle für eine Sanitär-Einrichtung, nämlich für eine Dusche. Dabei ist ein drehbarer Knopf vorgesehen, dessen Front einen inneren und einen äußeren Ring umfasst. Auf dem äußeren Ring sind Auswahltasten für verschiedene Wasserabgabe-Auslässe vorgesehen. Der innere Ring weist ein Display zur Anzeige der momentanen Wassertemperatur und des momentanen Wasserdurchflusses sowie ferner Tasten auf, welche der Auswahl von Wassertemperatur oder Wasserdurchfluss für eine manuelle Verstellung durch Drehen des Knopfes dienen. Die betreffende Einstellung wird durch Drücken des Knopfes bestätigt.

Dass solche programmgesteuerten Sanitär-Einrichtungen trotz ihrer Beschreibung schon vor weit über zwanzig Jahren und trotz des schon ebenso lange anhaltend steigenden Komfortbedürfnisses innerhalb der angesprochenen Bevölkerungs-Zielgruppe in der Praxis noch keine relevante Verbreitung gefunden haben, lässt sich damit erklären, dass wirklich praxistaugliche programmgesteuerte Sanitär-Einrichtungen noch nicht existieren. Hier Abhilfe zu schaffen ist die Hauptzielsetzung der vorliegenden Erfindung. Diese hat sich, mit anderen Worten, zur Aufgabe gemacht, eine den - insbesondere im Hinblick auf Handhabung und Benutzung bestehenden - praxisrelevanten Anforderungen genügende programmgesteuerte Sanitär-Einrichtung der eingangs angegebenen Art bereitzustellen.

Gelöst wird diese Aufgabenstellung durch die Sanitär-Einrichtung nach Anspruch 1. Die erfindungsgemäße Sanitär-Einrichtung zeichnet sich somit, zusätzlich zu den eingangs dargelegten Merkmalen, durch die nachfolgende Kombination von synergetisch zusammenwirkenden Merkmalen aus:
- die elektronische Steuereinheit umfasst einen zur abrufbaren Hinterlegung mehrerer unterschiedlicher Wasserabgabeprogramme geeigneten Programmspeicher und eine zentrale Datenverarbeitungseinheit, welche auf mindestens einen die Dosier- und Mischventileinheit betätigenden Aktuator einwirkt;
- es ist eine die Programmauswahl sowie die manuelle Modifikation des ausgewählten Wasserabgabeprogramms ermöglichende Benutzer-Schnittstelle vorgesehen;
- die Benutzerschnittstelle weist ein Display, einen sich um das Display herum erstreckenden, um eine zum Display senkrechte Achse verdrehbaren Einstellring mit einer von radial außen zugänglichen Umfangs-Grifffläche und mindestens drei um den Einstellring herum angeordnete Schaltflächen auf;
- der Einstellring und/oder das Display ist axial bewegbar zur Betätigung eines Bestätigungs-Tasters;
- die drei Schaltflächen der Benutzerschnittstelle sind dergestalt als Programmwahl-Schaltfläche, als Ausgabe-Schaltfläche und als Temperatur-Schaltfläche ausgeführt, dass durch ihre Betätigung ein durch einen Einstellring-Drehaufnehmer bereitgestelltes Signal in der zentralen Datenverarbeitungseinheit im Sinne einer Wasserabgabeprogrammselektion, einer Ausgabe-Modifikation innerhalb eines aufgerufenen Wasserabgabeprogramms bzw. einer Temperatur-Modifikation innerhalb eines aufgerufenen Wasserabgabeprogramms verarbeitet wird;
- das Display verfügt über einen Zentral-Anzeigebereich und einen diesen ringförmig umgebenden Peripher-Anzeigebereich;
- der Peripher-Anzeigebereich umfasst mindestens drei den Schaltflächen räumlich zugeordnete Segmente mit jeweils einer Funktionswert-Statusanzeige der betreffenden Schaltflächenfunktion;
- durch Schaltflächen-Betätigung erfolgt eine Anzeige des Momentan-Einstellwerts der betreffenden Schaltflächenfunktion in dem Zentral-Anzeigebereich.

Für die erfindungsgemäße Sanitär-Einrichtung und die mit ihr verbundenen Vorteile, namentlich das hohe, bisher nicht bekannte Ausmaß an Benutzerfreundlichkeit, ist somit eine charakteristische Kombination an miteinander interagierenden strukturellen und steuerungstechnischen Merkmalen bestimmend, wobei die steuerungstechnischen Merkmale im Folgenden auch dort, wo dies nicht explizit zum Ausdruck gebracht wird, die entsprechende Konfiguration der programmierbaren elektronischen Steuereinheit angeben. Als für die exzellente Benutzerfreundlichkeit relevante Aspekte sind dabei die leichte Bedienbarkeit, die intuitiv zu bewerkstelligen ist, bei hervorragender Interaktion mit dem Benutzer infolge des erfindungsgemäß realisierten Feedbacks an diesen. Im Hinblick auf diese und weitere vorteilhafte Wirkungen und Gesichtspunkte erfindungsgemäßer Sanitär-Einrichtungen wird auf die nachfolgende Beschreibung verwiesen, insbesondere auch auf die Darlegung bevorzugter Weiterbildungen und Ausgestaltungen sowie die Erläuterung des zeichnerisch veranschaulichten bevorzugten Ausführungsbeispiels.

Gemäß einer ersten bevorzugten Weiterbildung ist die Steuereinheit so konfiguriert, dass durch Schaltflächen-Betätigung die Funktionswert-Statusanzeige der betreffenden Schaltflächenfunktion im zugeordneten Peripher-Anzeigebereich erlischt. So wird der Effekt, welcher durch die Anzeige des Momentan-Einstellwerts der betreffenden Schaltflächenfunktion in dem Zentral-Anzeigebereich erreicht wird, sogar noch verstärkt.

Bei einer anderen bevorzugten Weiterbildung der erfindungsgemäßen Sanitär-Einrichtung ist deren Steuereinheit so konfiguriert, dass die Segmente des Peripher-Anzeigebereiches ihre Farbe in Abhängigkeit von der eingestellten Wasserabgabetemperatur verändern. So wird dem Benutzer über das Display eine ergänzende Information bereitgestellt, und zwar in einer selbst bei (beispielsweise wegen abgenommener Brille bzw. entfernten Kontaktlinsen) herabgesetztem Sehvermögen intuitiv besonders gut wahrnehmbaren Form.

Gemäß einer wiederum anderen bevorzugten Weiterbildung der Erfindung ist die Steuereinheit so konfiguriert, dass durch Bestätigung einer Auswahloption und/oder eine vorgegebene Zeit nach der letzten Betätigung der Benutzerschnittstelle automatisch der Temperatur-Modifikationsmodus aktiviert wird. So wird, mit anderen Worten, die Steuereinheit automatisch in die Bereitschaft zur (manuellen) Modifikation der Temperatur des abgegebenen Wassers unter Verdrehen des Einstellringes versetzt, was der Erkenntnis Rechnung trägt, dass es sich bei der Temperatur des abgegebenen Wassers um eine für den Komfort des Benutzers besonders relevante Eigenschaft handelt. Eben dieser hohen Priorität der Temperatur des abgegebenen Wassers wird Rechnung getragen, indem die Modifikation der Wassertemperatur innerhalb eines aufgerufenen Wasserabgabeprogramms besonders leicht gemacht wird.

Je nach der individuellen Sanitär-Einrichtung kann der Ausgabe-Schaltfläche der Benutzerschnittstelle jeweils eine andere spezifische Steuerfunktionen zugewiesen sein, so dass nach Betätigung der Ausgabe-Schaltfläche über das Verdrehen des Einstellrings jeweils ein anderer Parameter der programmierten Wasserabgabe modifizierbar ist. So kann, was sich namentlich bei Badewannen als günstig erweist, durch Betätigung der Ausgabe-Schaltfläche und anschließendes Verdrehen des Einstellrings beispielsweise die durch den Wasserauslass abgegebene Gesamtmenge an Wasser, d. h. die Füllhöhe der Badewanne modifizierbar sein. Bei Duschen wird indessen auf diese Weise, d. h. mittels des Einstellrings unter vorausgehender Betätigung der Ausgabe-Schaltfläche bevorzugt der Durchfluss modifiziert. Entsprechendes gilt für Waschtische/-becken.

Zweckmäßigerweise ist jeweils stromabwärts der Dosier- und Mischventileinheit ein Durchflusssensor vorgesehen, dessen Messwert der zentralen Datenverarbeitungseinheit zugeführt wird. Dort kann dann, um den durch das (ggf. individuell modifizierte) Wasserabgabeprogramm vorgegebenen Durchsatz einzuhalten, eine Verarbeitung im Rahmen eines Durchfluss-Regelkreises erfolgen. Ebenso ist eine Verarbeitung des betreffenden Messwerts im Rahmen einer Integrationsstufe denkbar, nämlich wenn es um die Einhaltung einer durch das (ggf. individuell modifizierte) Wasserabgabeprogramm vorgegebenen Gesamtmenge an abgegebenem Wasser geht. Weiterhin ist zweckmäßigerweise stromabwärts der Dosier- und Mischventileinheit ein Temperatursensor vorgesehen, dessen Messwert der zentralen Datenverarbeitungseinheit zugeführt wird. Dort kann dann, um die durch das (ggf. individuell modifizierte) Wasserabgabeprogramm vorgegebene Wassertemperatur einzuhalten, eine Verarbeitung im Rahmen eines Temperatur-Regelkreises erfolgen.

Gemäß einer wiederum anderen bevorzugten Weiterbildung der vorliegenden Erfindung, wie sie insbesondere bei Duschen zur Anwendung kommen kann, weist die Sanitär-Einrichtung mindestens zwei Wasser-Auslässe und ein Verteilventil zur Umschaltung der Wasserabgabe zwischen den Wasser-Auslässen auf, wobei die zentrale Datenverarbeitungseinheit auf mindestens einen das Verteilventil betätigenden Aktuator gemäß einer an der Benutzerschnittstelle vorgenommenen Auslass-Einstellung einwirkt. Besonders komplexe Dusch- bzw. Wasserabgabeprogramme können dabei jeweils eine bestimmte Abfolge der Wasserabgabe über die verschiedenen Wasser-Auslässe über spezifische Zeiträume mit jeweils unterschiedlichen bzw. wechselnden Temperaturen und/oder Durchsätzen definieren. Eine individuelle Modifikation der vorprogrammierten Wasserabgabe über die verschiedenen Wasser-Auslässe ist dabei in der weiter oben für die Modifikation von Durchsatz, Füllmenge bzw. Wasserqualität beschriebenen Weise möglich; auch insoweit kann, sofern diese nicht anderweitig belegt ist, die Ausgabe-Schaltfläche maßgeblich sein.

Im Hinblick auf die größtmögliche Benutzerfreundlichkeit hat sich als besonders vorteilhaft erwiesen, wenn, gemäß einer abermals anderen bevorzugten Weiterbildung der vorliegenden Erfindung, die Benutzerschnittstelle vier um den Einstellring herum angeordnete Schaltflächen aufweist, wobei der ringförmige Peripher-Anzeigebereich des Displays vier den Schaltflächen räumlich zugeordnete Segmente (mit jeweils einer Funktionswert-Statusanzeige der betreffenden Schaltflächenfunktion) umfasst. Die für typische Anwendungsfälle der vorliegenden Erfindung ideale Belegung der vier Schaltflächen richtet sich dabei nach der individuellen Sanitär-Einrichtung. Zusätzlich zur Programmwahl-Schaltfläche und zur Temperatur-Schaltfläche sind es bei einer Dusche eine Ausgabe-Schaltfläche (zur Modifikation des Durchflusses) sowie eine Auslassauswahl-Schaltfläche (zur Modifikation des Wasser-Auslasses), bei einer Badewanne eine Ausgabe-Schaltfläche (zur Modifikation des Durchflusses oder des Wasser-Auslasses) sowie eine Füllmengen-Schaltfläche (zur Modifikation der Füllmenge) und bei einem Waschtisch/Waschbecken eine Ausgabe-Schaltfläche (zur Modifikation des Durchflusses) sowie eine Beckenhöhen- oder eine Füllmengen-Schaltfläche (zur Modifikation der Beckenhöhe bzw. der Füllmenge).

Mit den vier Schaltflächen, von denen eine mit der Programmwahl, d. h. der Auswahl eines spezifischen Wasserabgabeprogramms aus dem in dem Programmspeicher (ggf. speziell für den individuellen Benutzer, s. u.) hinterlegten Angebot, verknüpft ist und die drei weiteren mit der persönlich-momentanen Modifikation des aufgerufenen Wasserabgabeprogramms durch individuelle Veränderung besonders charakteristischer Parameter der Wasserabgabe, lassen sich auf praxisgerechte Weise auch solche Sanitär-Einrichtungen bedienen, welche zur Durchführung hochgradig komplexer Wasserabgabeprogramme imstande sind. Denn es hat sich gezeigt, dass für weitere für die jeweilige Wasserabgabe charakteristische Parameter ein eher nur untergeordneter Bedarf an einer Modifikation innerhalb des jeweils aufgerufenen Programms besteht, so dass - im Interesse einer benutzerfreundlichen Handhabung - insoweit auf die Möglichkeit eines solchen Eingriffs in das Programm verzichtet wird zugunsten der Hinterlegung eines gesonderten, in eben jenem Parameter abgewandelten Wasserabgabeprogramms. Solch ein Parameter des Wasserabgabeprogramms, der ggf. nicht innerhalb des aufgerufenen Wasserabgabeprogramms über die Benutzerschnittstelle modifizierbar ist, sondern (nur) über die Auswahl eines anderen Wasserabgabeprogramms geändert werden kann, kann beispielsweise in der Art bzw. Qualität des Wassers bestehen. In diesem Sinne kann vorgesehen sein, dass für unterschiedliche Wasserabgabeprogramme verschiedene Wasserqualitäten bzw. Wasserarten vorgegeben werden können, beispielsweise ungefiltertes und gefiltertes Wasser oder Wasser ohne bzw. mit einem Zusatz. Diese Option ist ganz besonders attraktiv bei Sanitär-Einrichtungen, bei denen das entnommene Wasser mit Lebensmitteln in Berührung kommt und/oder zur Zubereitung von Speisen/Getränken verwendet wird, d. h. insbesondere bei in Küchen installierten Sanitär-Einrichtungen. Es versteht sich, dass bei dieser Umsetzung der Erfindung an die Dosier- und

Mischventileinheit typischerweise zwei (unterschiedliche Wasserarten/-qualitäten liefernde) Kaltwasser-Zuläufe und zwei (unterschiedliche Wasserarten/-qualitäten liefernde) Warmwasser-Zuläufe angeschlossen sind. Vergleichbares gilt, wenn die Sanitär-Einrichtung einen Vorratsbehälter für ein Körperpflegeprodukt samt einer angeschlossenen, stromaufwärts des Wasserauslasses mündenden Dosier- und Abgabeeinrichtung umfasst, wobei die zentrale Datenverarbeitungseinheit bei zumindest einem der Wasserabgabeprogramme die Dosier- und Abgabeeinrichtung betätigt.

Ist bei einer Sanitär-Einrichtung, deren Benutzerschnittstelle im vorstehenden Sinne über vier Schaltflächen verfügt, im Einzelfall erwünscht, dass über die drei mittels der betreffenden Schaltflächen (und somit haptisch) modifizierbaren Parameter der Wasserabgabe hinausgehend Modifikationen an dem jeweils aufgerufenen Programm vorgenommen werden können, so ist zweckmäßig, die elektronische Steuereinheit mit einem akustischen Steuermodul auszustatten, welches eine Sprachsteuerung ermöglicht. Ein solches kann sich auch unter dem Gesichtspunkt einer Redundanz im Notfall als vorteilhaft erweisen, insbesondere indem - sogar aus der Distanz - mittels spezifischer Kommandos (z. B. "Wasser stopp") eine Betätigung zentraler Funktionen erfolgen kann.

Teil des jeweiligen Wasserabgabeprogramms, wie es in dem Programmspeicher abrufbar hinterlegt ist, können im Übrigen auch Elemente sein, die über die Steuerung der Wasserabgabe im engeren Sinne hinausgehen. Beispielsweise können über entsprechende Programm-Elemente Beleuchtungseinrichtungen und/oder Einrichtungen zur Erzeugung von Sound angesteuert werden, so dass sich beim Aufrufen eines bestimmten Wasserabgabeprogramms an der Sanitär-Einrichtung bzw. in dem Raum eine vorgegebene Beleuchtungs- und/oder Soundsituation einstellt.

Im Interesse eines besonders hohen Nutzerkomforts verfügt die elektronische Steuereinheit besonders bevorzugt über einen die individuell vorgenommene Modifikation des aufgerufenen Wasserabgabeprogramms speichernden Modifikationsspeicher. Der Speichermodus richtet sich dabei nach den individuellen Bedürfnissen, Anforderungen oder Gegebenheiten. So kann beispielsweise eine dauerhafte Speicherung der jeweiligen Modifikation erfolgen, ggf. als ergänzendes (modifiziertes) Wasserabgabeprogramm zusätzlich zu dem die Basis bildenden unmodifizierten Wasserabgabeprogramm. In Betracht kommt allerdings auch eine nur vorübergehende Speicherung, beispielsweise so lange, bis der betreffende Benutzer die Sanitär-Einrichtung oder den Raum verlässt. Ist bei einer mehrere Wasser-Auslässe aufweisenden Sanitär-Einrichtung einer von diesen handgeführt benutzbar (z. B. als Handbrause einer Dusche), so ist - gemäß einer wiederum anderen bevorzugten Weiterbildung der Erfindung - ein diesem Wasser-Auslass zugeordneter Nutzungssensor vorgesehen, der ein der zentralen Datenverarbeitungseinheit zuführbares Nutzungssignal generiert. Die Datenverarbeitungseinheit ist dabei dergestalt konfiguriert, dass - ggf. unter entsprechender Modifikation des aufgerufenen Wasserabgabeprogramms - die Wasserabgabe automatisch auf den handgeführten Wasser-Auslass umgeschaltet wird, wenn dieser aus einer zugeordneten Halterung entnommen oder auf sonstige Weise die (beabsichtigte) Ingebrauchnahme erfasst wird.

Eine nochmals andere bevorzugte Weiterbildung der Erfindung zeichnet sich dadurch aus, dass ein Benutzer-Identifikationssensor vorgesehen ist, wobei ein durch diesen generiertes Benutzer-Identifikationssignal der zentralen Datenverarbeitungseinheit zuführbar ist und eine personenspezifische Vorselektion der an der Benutzerschnittstelle zur Auswahl angebotenen Wasserabgabe-Programme bewirkt. Es erhält nicht jeder Benutzer das gleiche Angebot an Wasserabgabeprogrammen mit entsprechend voreingestellten Parametern; vielmehr werden verschiedenen die betreffende Sanitär-Einrichtung benutzenden Personen unterschiedliche, individuell zusammengestellte Wasserabgabeprogrammangebote unterbreitet. Das erleichtert und beschleunigt die Programmauswahl und macht diese besonders komfortabel.

Der Benutzer-Identifikationssensor kann dabei beispielsweise auf biometrische Merkmale (z. B. Bewegungsmuster, Fingerabdruck, Gesichtsmuster, Stimmmuster, etc.) des jeweiligen Benutzers zurückgreifen oder auf technische Merkmale wie beispielsweise Erkennungscodes persönlicher Geräte oder Transponder an persönlicher Ausstattung. Angesichts des typischerweise gerade bei der Benutzung von Sanitär-Einrichtungen gesteigerten Intimitäts-Bedürfnisses ist dabei der Benutzer-Identifikationssensor, wenn dieser zur Erfassung von biometrischen Merkmalen der die Sanitär-Einrichtung benutzenden Person ausgeführt ist, besonders bevorzugt zwischen einer Erfassungs-Konfiguration und einer physisch hiervon unterscheidbaren Blind-Konfiguration verstellbar. In diesem Sinne kann beispielsweise eine zur Erfassung von Bewegungsmustern oder Gesichtsmustern ausgeführte Kamera zwischen einer aus einem Gehäuse bzw. einer Einhausung ausgefahrenen Erfassungs-Konfiguration und einer in das Gehäuse bzw. in die Einhausung eingefahrenen Blind-Konfiguration verstellbar sein. So ist für den Benutzer ohne weiteres und unmittelbar ersichtlich, ob die Erfassung seiner biometrischen Merkmale aktiviert oder deaktiviert ist. Der Benutzer-Identifikationssensor kann dabei beispielsweise durch die zentrale Datenverarbeitungseinheit nach erfolgter Benutzer-Identifikation automatisch in seine Blind-Konfiguration verstellt werden; eine automatische Zurück-Verstellung in die Erfassungs-Konfiguration mittels der zentrale Datenverarbeitungseinheit kann dabei beispielsweise ausgelöst werden, wenn die betreffende Person die Sanitär-Einrichtung der den Raum verlässt. Eine andere bevorzugte Möglichkeit besteht darin, dass der Benutzer-Identifikationssensor durch die zentrale Datenverarbeitungseinheit gemäß durch den betreffenden Benutzer selbst definierten Kriterien situationsabhängig in seine Blind-Konfiguration verstellt wird.

Weiterhin kann ein Zeitgeber vorgesehen sein, wobei ein durch diesen generiertes Zeitsignal (Tag, Uhrzeit) der zentralen Datenverarbeitungseinheit zuführbar ist und eine zeitspezifische Vorselektion oder Vorsortierung der an der Benutzerschnittstelle zur Auswahl angebotenen Wasserabgabe-Programme bewirkt. Hierzu sind durch den betreffenden Benutzer seinen persönlichen WasserabgabeProgrammen, in der programmierbaren Steuerung hinterlegt, spezifische Zeit-Präferenzen zugeordnet, so dass ihm an der Benutzerschnittstelle beispielsweise an einem Wochentag ein anderes Programmangebot unterbreitet wird als am Wochenende, und an dem gleichen Tag morgens ein anderes Programmangebot als abends.

Die Vornahme der verschiedenen Programmierungen, insbesondere das Erstellen von über die Benutzerschnittstelle aufrufbaren persönlichen Wasserabgabeprogrammen erfolgt bevorzugt durch den jeweiligen Benutzer vermittels eines mobilen Endgeräts, nämlich einer auf diesem installierten App. Vor diesem Hintergrund umfasst die Steuereinheit zweckmäßigerweise eine Datenkommunikationsschnittstelle (z. B. Bluetooth), insbesondere für die Eingabe von auf einem externen Gerät oder über dieses erstellten Programmdaten.

Im Folgenden wird die vorliegende Erfindung anhand eines in der Zeichnung veranschaulichten bevorzugten Ausführungsbeispiels in Form einer Dusche näher erläutert. Dabei zeigt
- Fig. 1: in teilweise schematischer Weise eine als Dusche ausgeführte erfindungsgemäße Sanitär-Einrichtung,
- Fig. 2: die Benutzerschnittstelle der in Fig. 1 gezeigten Dusche in perspektivischer Ansicht,
- Fig. 3: in Form der vier Teilfiguren 3A, 3B, 3C und 3D das Display der Benutzerschnittstelle nach Fig. 2 in unterschiedlichen Bedienphasen und
- Fig. 4: die Benutzeroberfläche einer zur Programmierung der Dusche auf einem mobilen Endgerät installierten App.

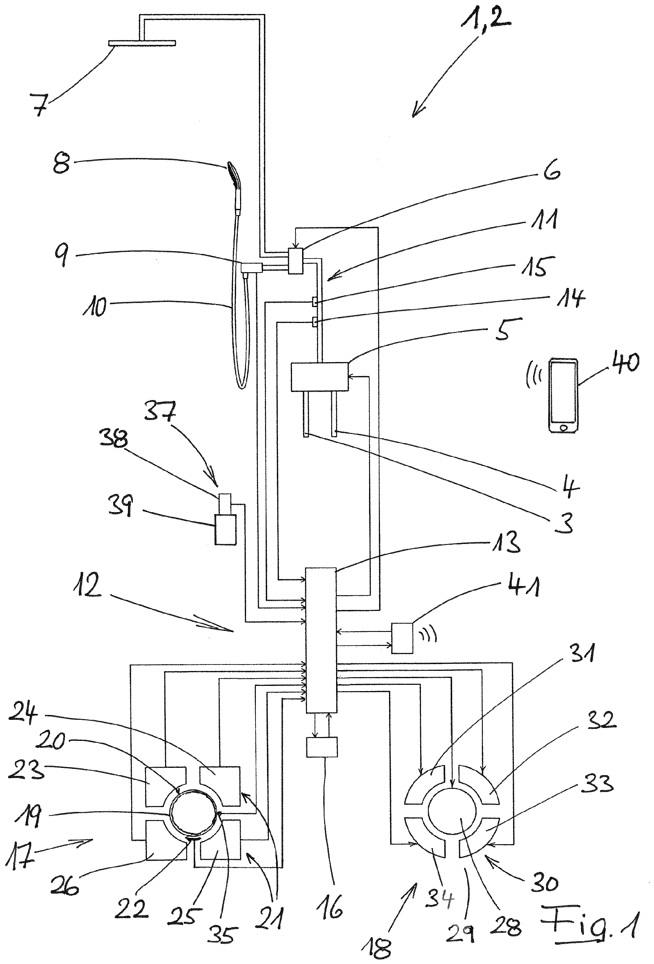

Die in Fig. 1 gezeigte, als Dusche 1 ausgeführte Sanitär-Einrichtung 2 verfügt - in bekannter Weise - über einen Kaltwasser-Zulauf 3, einen Warmwasser-Zulauf 4, eine Dosier- und Mischventileinheit 5, ein Verteilventil 6 und zwei Wasser-Auslässe in Form einer Kopfbrause 7 und einer Handbrause 8 (samt Wandanschluss/Halterung 9 und Schlauch 10). Die entsprechenden Komponenten sind in als solches bekannter und üblicher Weise über wasserführende Leitungen 11 miteinander verbunden.

Zur Steuerung der Wasserabgabe über die Kopfbrause 7 oder die Handbrause 8 mit einem bestimmten Durchfluss und einer bestimmten Temperatur werden die Dosier- und Mischventileinheit 5 und das Verteilventil 6 durch eine elektronische Steuereinheit 12 betätigt. Hierzu wirkt eine zentrale Datenverarbeitungseinheit 13 der elektronischen Steuereinheit 12 auf der Dosier- und Mischventileinheit 5 sowie dem Verteilventil 6 zugeordnete (nicht dargestellte) Aktuatoren ein.

Die tatsächliche Wasser-Temperatur und der tatsächliche Wasser-Durchfluss stromabwärts der Dosier- und Mischventileinheit 5 werden über einen Temperatursensor 14 bzw. einen Durchflusssensor 15 erfasst, und die betreffenden Messwerte werden für eine Temperatur- und Durchflussregelung auf die zentrale Datenverarbeitungseinheit 13 zurückgeführt.

Die elektronische Steuereinheit 12 ist in dem Sinne programmierbar, dass die über die beiden Wasser-Auslässe erfolgende Wasserabgabe programmgesteuert abläuft. Hierzu umfasst die elektronische Steuereinheit 12 einen zur abrufbaren Hinterlegung mehrerer unterschiedlicher Wasserabgabeprogramme geeigneten, mit der zentralen Datenverarbeitungseinheit 13 kommunizierenden Programmspeicher 16. Weiterhin kommuniziert mit der zentralen Datenverarbeitungseinheit 13 eine Benutzerschnittstelle 17, welche die Auswahl des durchzuführenden Wasserabgabeprogramms sowie dessen manuelle Modifikation ermöglicht.

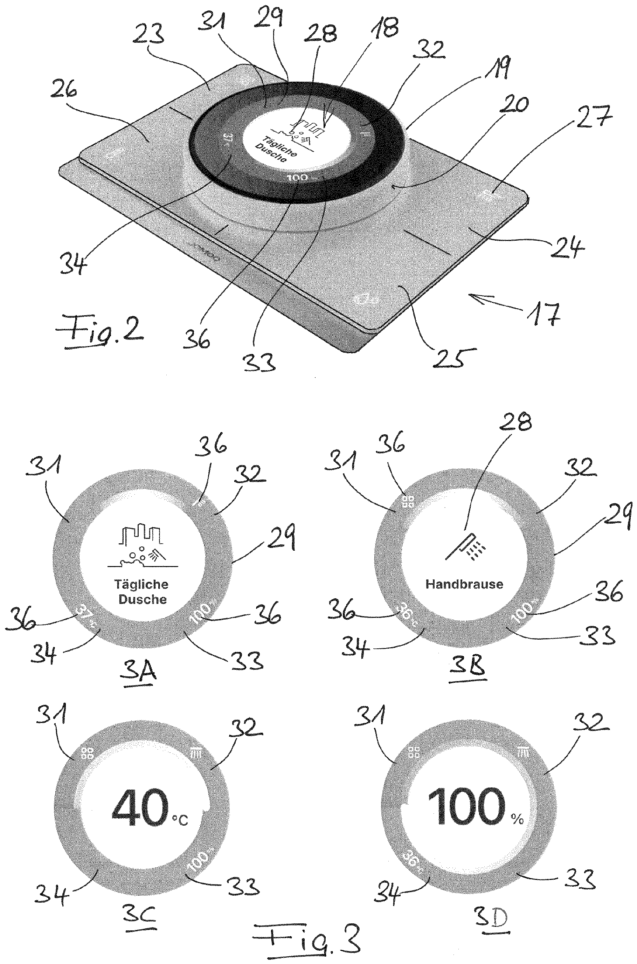

Während die Benutzerschnittstelle 17 in Fig. 2 in ihrer räumlich-körperlichen Ausführung dargestellt ist, sind ihre einzelnen Elemente, Teile, Komponenten und Bereiche in Fig. 1 - aus Gründen der Darstellung - voneinander isoliert. Die Benutzerschnittstelle 17 weist ein rundes Display 18, einen sich um das Display 18 herum erstreckenden, um eine zum Display 18 senkrechte Achse verdrehbaren Einstellring 19 mit einer von radial außen zugänglichen Umfangs-Grifffläche 20 und vier um den Einstellring 19 herum angeordnete, gegenüber diesem sowie dem Display 18 zurückversetzte Schaltflächen 21 auf. Der Einstellring 19 wirkt mit einem ihm zugeordneten Einstellring-Drehaufnehmer 22 zusammen. Gemäß den ihnen zugewiesenen Funktionen (s. u.) handelt es sich bei den vier Schaltflächen 21 um eine Programmwahl-Schaltfläche 23, eine Auslassauswahl-Schaltfläche 24, eine Ausgabe-Schaltfläche 25 und eine Temperatur-Schaltfläche 26. Alle vier Schaltflächen 21 weisen ein ihre Funktion symbolisierendes hinterleuchtetes Funktionssymbol 27 auf.

Das Display 18 verfügt über einen Zentral-Anzeigebereich 28 und einen diesen kreisringförmig umgebenden Peripher-Anzeigebereich 29. Letzterer umfasst vier den Schaltflächen 21 räumlich zugeordnete Segmente 30 in Form eines Programmanzeige-Segments 31, eines Auslassanzeige-Segments 32, eines Ausgabeanzeige-Segments 33 und eines Temperaturanzeige-Segments 34.

Die elektronische Steuereinheit 12 ist so konfiguriert, dass ein nach einer Betätigung der Programmwahl-Schaltfläche 23 beim Drehen des Einstellrings 19 durch den Einstellring-Drehaufnehmer 22 bereitgestelltes Signal in der zentralen Datenverarbeitungseinheit 13 im Sinne einer Wasserabgabeprogrammselektion verarbeitet wird.

Durch fortgesetztes Drehen des Einstellrings 19 werden in dem Zentral-Anzeigebereich 28 des Displays 18 nacheinander Symbole angezeigt, welche den einzelnen in dem Programmspeicher 16 hinterlegten Wasserabgabeprogrammen zugewiesen sind und diese symbolisieren. Durch Drücken des - axial bewegbar gelagerten - Displays 18 erfolgt eine Betätigung eines Bestätigungs-Tasters 35 und auf diese Weise eine Bestätigung bzw. ein Aufruf des in dem Zentral-Anzeigebereich 28 des Displays 18 über das zugeordnete Symbol angezeigten Wasserabgabeprogramms. Dieses wird durch die zentrale Datenverarbeitungseinheit 13 aus dem Programmspeicher 16 abgerufen.

Innerhalb des jeweils aufgerufenen Wasserabgabeprogramms kann der Benutzer über die Benutzerschnittstelle 17 manuell individuelle Modifikationen charakteristischer Wasserabgabeparameter vornehmen, so dass die Wasserabgabe - unter entsprechender Abweichung vom aufgerufenen Programm - individuell an die persönlichen Bedürfnisse angepasst werden kann. Hierzu ist die elektronische Steuereinheit 12 so konfiguriert, dass in der zentralen Datenverarbeitungseinheit 13 ein nach einer Betätigung der Temperatur-Schaltfläche 26 durch den Einstellring-Drehaufnehmer 22 bereitgestelltes Signal im Sinne einer Temperatur-Modifikation, ein nach einer Betätigung der Ausgabe-Schaltfläche 25 durch den Einstellring-Drehaufnehmer 22 bereitgestelltes Signal im Sinne einer Durchfluss-Modifikation und ein nach einer Betätigung der Auslassauswahl-Schaltfläche 24 durch den Einstellring-Drehaufnehmer 22 bereitgestelltes Signal im Sinne einer Umschaltung des Wasser-Auslasses verarbeitet wird.

Unabhängig von einer Bedienung an der Benutzerschnittstelle 17 erfolgt eine automatische Umschaltung der Wasserabgabe auf die Handbrause 8, wenn diese der Halterung 9 entnommen wird. Hierzu verfügt die Halterung 9 über einen eingebetteten Sensor (Nutzungssensor), der bei der Entnahme der Handbrause 8 ein der zentralen Datenverarbeitungseinheit 13 zugeführtes Nutzungssignal generiert.

Jedes der vier Segmente 30 des Peripher-Anzeigebereichs 29 weist eine Funktionswert-Statusanzeige 36 der betreffenden Schaltflächenfunktion auf. So zeigt die in das Programmanzeige-Segment 31 eingebettete Funktionswert-Statusanzeige - über das diesem zugeordnete Programmsymbol - das aufgerufene Wasserabgabeprogramm an; und die momentanen, aktuellen - sich ggf. durch Modifikation des aufgerufenen Programms (s. o.) ergebenden - Funktions-/Einstellwerte für Wassertemperatur, Wasserdurchfluss und Wasser-Auslass sind mittels der in das Temperaturanzeige-Segment 34, in das Ausgabeanzeige-Segment 33 und das Auslassanzeige-Segment 32 des Peripher-Anzeigebereichs 29 des Displays 18 eingebetteten Funktionswert-Statusanzeigen 36 angezeigt. Allerdings erlischt mit der Betätigung einer der Schaltflächen 21 die Funktionswert-Statusanzeige 36 in dem dieser Schaltfläche 21 zugeordneten Segment 30 des Peripher-Anzeigebereichs 29; und der momentane Funktions-/Einstellwert, der nach Betätigung der betreffenden Schaltfläche 21 mittels des Einstellrings 19 verstellbar ist, wird entsprechend groß in dem Zentral-Anzeigebereich 28 des Displays 18 angezeigt, so dass die Veränderung für den Benutzer besonders leicht erkennbar ist. Veranschaulicht ist dies in den Teilfiguren 3A bis 3D der Fig. 3.

Die elektronische Steuereinheit 12 ist weiterhin so konfiguriert, dass die Segmente 30 des Peripher-Anzeigebereiches 29 gemeinsam ihre Farbe in Abhängigkeit von der eingestellten Wasserabgabetemperatur verändern; so wechselt der ringförmige Peripher-Anzeigebereich 29 als Ganzes seine Farbe - graduell abgestuft - von blau (bei niedrigen Wassertemperaturen) nach rot (bei hohen Wassertemperaturen). Weiterhin wird eine vorgegebene Zeit (z. B. zwei Sekunden) nach der letzten Betätigung der Benutzerschnittstelle 17 automatisch der Temperatur-Modifikationsmodus aktiviert, in dem ein Drehen des Einstellrings 19 eine Veränderung der eingestellten Temperatur bewirkt.

Bei der Dusche nach Fig. 1 ist weiterhin ein an die zentrale Datenverarbeitungseinheit 13 angeschlossener Benutzer-Identifikationssensor 37 vorgesehen. Dieser ist als Edge-Computing-Kamera 38 ausgeführt, welche den jeweiligen Benutzer anhand seines individuellen Bewegungsmusters erkennt. Durch Identifizierung des Benutzers in der Peripherie, d. h. in der Edge-Computing-Kamera 38, erübrigt sich eine Übermittlung der erfassten Bewegungsdaten an die zentrale Datenverarbeitungseinheit 13. Das in der Edge-Computing-Kamera 38 generierte, der zentralen Datenverarbeitungseinheit 13 zugeführte Benutzer-Identifikationssignal wird in der zentralen Datenverarbeitungseinheit 13 für eine personenspezifische Vorselektion der an der Benutzerschnittstelle 17 zur Auswahl angebotenen Wasserabgabe-Programme verwertet. Die Edge-Computing-Kamera 38 ist dabei zwischen einer Erfassungs-Konfiguration und einer physisch hiervon unterscheidbaren Blind-Konfiguration verstellbar, indem sie in letzterer vollständig in ein Gehäuse 39 versenkt ist.

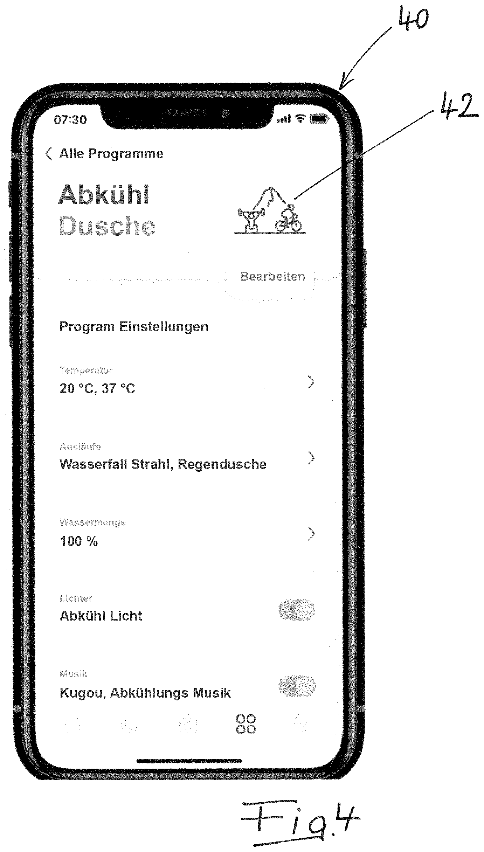

Für ihre Programmierung mittels eines externen mobilen Endgeräts, namentlich eines Smartphones 40, auf welchem eine hierzu ausgelegte und geeignete App installiert ist, verfügt die elektronische Steuereinheit 12 über eine Datenkommunikationsschnittstelle 41. Fig. 4 zeigt beispielhaft eine mögliche Smartphone-Benutzeroberfläche der entsprechenden App, und zwar auf der Ebene der Programmierung eines bestimmten - hier als "Cool Down Shower" bezeichneten und mit einem spezifischen Symbolbild 42, welches dem an der Benutzerschnittstelle 17 angezeigten Programmsymbol entspricht, illustrierten - Wasserabgabeprogramms. Erkennbar ist die Möglichkeit der Einstellung (ggf. einer Abfolge) von Wasser-Temperaturen, Wasser-Auslässen und Wasser-Durchflüssen. Dem Wasserabgabeprogramm lassen sich weiterhin bestimmte individuelle Beleuchtungs- und Sound-Szenarien zuweisen. Andere Parameter, die - bei entsprechender Hardwareausstattung der Sanitär-Einrichtung - dem jeweiligen Wasserabgabeprogramm unter Nutzung der Programmier-App zugewiesen werden könnten, können beispielsweise sein die Zugabe eines Körperpflegemittels zu dem abgegebenen Wasser, eine Beduftung der Sanitär-Einrichtung, die Wärmeerzeugung mittels einer Heizeinrichtung, die Be-/Entlüftung mittels eines Ventilators, die Aktivierung eines Sichtschutzes, etc.

## Patentansprüche

1. Sanitär-Einrichtung (2) mit einem Kaltwasser-Zulauf (3), einem Warmwasser-Zulauf (4), mindestens einem Wasser-Auslass und einer Dosier- und Mischventileinheit (5), welche zur Beeinflussung des Gesamtdurchflusses durch den Wasser-Auslass und des Verhältnisses der Kaltwasser-Teilmenge und der Warmwasser-Teilmenge zueinander an dem Gesamtdurchfluss geeignet ist, wobei auf die Dosier- und Mischventileinheit (5) eine programmierbare elektronische Steuereinheit (12) einwirkt, mit den folgenden Merkmalen:
- die elektronische Steuereinheit (12) umfasst einen zur abrufbaren Hinterlegung mehrerer unterschiedlicher Wasserabgabeprogramme geeigneten Programmspeicher (16) und eine zentrale Datenverarbeitungseinheit (13), welche auf mindestens einen die Dosier- und Mischventileinheit (5) betätigenden Aktuator einwirkt;
- es ist eine die Programmauswahl sowie die manuelle Modifikation des ausgewählten Wasserabgabeprogramms ermöglichende Benutzerschnittstelle (17) vorgesehen;
- die Benutzerschnittstelle (17) weist ein Display (18), einen sich um das Display (18) herum erstreckenden, um eine zum Display (18) senkrechte Achse verdrehbaren Einstellring (19) mit einer von radial außen zugänglichen Umfangs-Grifffläche (20) und mindestens drei Schaltflächen (21) auf;
**gekennzeichnet durch** die folgenden Merkmale:
- die mindestens drei Schaltflächen (21) sind um den Einstellring (19) herum angeordnet;
- der Einstellring (19) und/oder das Display (18) ist axial bewegbar zur Betätigung eines Bestätigungs-Tasters (35);
- drei der mindestens drei Schaltflächen (21) der Benutzerschnittstelle (17) sind dergestalt als Programmwahl-Schaltfläche (23), als Ausgabe-Schaltfläche (25) und als Temperatur-Schaltfläche (26) ausgeführt, dass durch ihre Betätigung ein durch einen Einstellring-Drehaufnehmer (22) bereitgestelltes Signal in der zentralen Datenverarbeitungseinheit (13), abhängig von der betätigten Schaltfläche (21), im Sinne einer Wasserabgabeprogrammselektion, einer Ausgabe-Modifikation innerhalb eines aufgerufenen Wasserabgabeprogramms oder einer Temperatur-Modifikation innerhalb eines aufgerufenen Wasserabgabeprogramms verarbeitet wird;
- das Display (18) verfügt über einen Zentral-Anzeigebereich (28) und einen diesen ringförmig umgebenden Peripher-Anzeigebereich (29);
- der Peripher-Anzeigebereich (29) umfasst mindestens drei den Schaltflächen (21) räumlich zugeordnete Segmente (30) mit jeweils einer Funktionswert-Statusanzeige (36) der betreffenden Schaltflächenfunktion;
- durch Schaltflächen-Betätigung erfolgt eine Anzeige des Momentan-Einstellwerts der betreffenden Schaltflächenfunktion in dem Zentral-Anzeigebereich (28).

2. Sanitär-Einrichtung nach Anspruch 1, **dadurch gekennzeichnet, dass** durch Schaltflächen-Betätigung die Funktionswert-Statusanzeige (36) der betreffenden Schaltflächenfunktion im zugeordneten Segment (30) des Peripher-Anzeigebereichs (29) erlischt.

3. Sanitär-Einrichtung nach Anspruch 1 oder Anspruch 2, **dadurch gekennzeichnet, dass** die Segmente (30) des Peripher-Anzeigebereiches (29) ihre Farbe in Abhängigkeit von der eingestellten Wasserabgabetemperatur verändern.

4. Sanitär-Einrichtung nach einem der Ansprüche 1 bis 3, **dadurch gekennzeichnet, dass** durch Bestätigung einer Auswahloption und/oder eine vorgegebene Zeit nach der letzten Betätigung der Benutzerschnittstelle (17) automatisch der Temperatur-Modifikationsmodus aktiviert wird.

5. Sanitär-Einrichtung nach einem der Ansprüche 1 bis 4, **dadurch gekennzeichnet, dass** mittels der Ausgabe-Schaltfläche (25) der Wasserdurchfluss durch den Wasserauslass oder die durch den Wasserauslass abgegebene Gesamtmenge an Wasser verstellbar ist.

6. Sanitär-Einrichtung nach einem der Ansprüche 1 bis 5, **dadurch gekennzeichnet, dass** stromabwärts der Dosier- und Mischventileinheit (5) ein Durchflusssensor (15) vorgesehen ist, dessen Messwert einem Durchfluss-Regelkreis der zentralen Datenverarbeitungseinheit (13) zugeführt wird.

7. Sanitär-Einrichtung nach einem der Ansprüche 1 bis 4, **dadurch gekennzeichnet, dass** mittels der Ausgabe-Schaltfläche (25) die Art oder Qualität des ausgegebenen Wassers verstellbar ist.

8. Sanitär-Einrichtung nach einem der Ansprüche 1 bis 7, **dadurch gekennzeichnet, dass** die Sanitär-Einrichtung (2) mindestens zwei Wasser-Auslässe und ein Verteilventil (6) zur Umschaltung der Wasserabgabe zwischen den Wasser-Auslässen aufweist, wobei die zentrale Datenverarbeitungseinheit (13) auf mindestens einen das Verteilventil (6) betätigenden Aktuator gemäß einer an der Benutzerschnittstelle (17) vorgenommenen Auslass-Einstellung einwirkt.

9. Sanitär-Einrichtung nach Anspruch 8, **dadurch gekennzeichnet, dass** die Auslass-Einstellung vermittels der Ausgabe-Schaltfläche (25) oder vermittels einer als Auslassauswahl-Schaltfläche (24) ausgeführten vierten Schaltfläche (21) der Benutzerschnittstelle (17), der ein viertes Segment (30) des Peripher-Anzeigebereichs (29) des Displays (18) der Benutzerschnittstelle (17) zugeordnet ist, erfolgt.

10. Sanitär-Einrichtung nach Anspruch 8 oder Anspruch 9, **dadurch gekennzeichnet, dass** mindestens einer der mindestens zwei Wasser-Auslässe handgeführt benutzbar ist, wobei ein diesem Wasser-Auslass zugeordneter Nutzungssensor ein der zentralen Datenverarbeitungseinheit (13) zuführbares Nutzungssignal generiert.

11. Sanitär-Einrichtung nach einem der Ansprüche 1 bis 7, **dadurch gekennzeichnet, dass** die Sanitär-Einrichtung ein Waschtisch ist, wobei vermittels einer als Füllmengen-Schaltfläche oder als Beckenhöhen-Schaltfläche ausgeführten vierten Schaltfläche (21), der ein viertes Segment (30) des Peripher-Anzeigebereichs (29) des Displays (18) der Benutzerschnittstelle (17) zugeordnet ist, und des Einstellrings (19) der Benutzerschnittstelle (17) die Füllmenge bzw. die Höhe des Beckens verstellbar ist.

12. Sanitär-Einrichtung nach einem der Ansprüche 1 bis 11, **dadurch gekennzeichnet, dass** ein die individuell vorgenommene Modifikation des aufgerufenen Wasserabgabeprogramms speichernder Modifikationsspeicher vorgesehen ist.

13. Sanitär-Einrichtung nach einem der Ansprüche 1 bis 12, **dadurch gekennzeichnet, dass** ein Benutzer-Identifikationssensor (37) vorgesehen ist, wobei ein durch diesen generiertes Benutzer-Identifikationssignal der zentralen Datenverarbeitungseinheit (13) zuführbar ist und eine personenspezifische Vorselektion der an der Benutzerschnittstelle (17) zur Auswahl angebotenen Wasserabgabe-Programme bewirkt.

14. Sanitär-Einrichtung nach Anspruch 13, **dadurch gekennzeichnet, dass** der Benutzer-Identifikationssensor (37) zwischen einer Erfassungs-Konfiguration und einer physisch hiervon unterscheidbaren Blind-Konfiguration verstellbar ist.

15. Sanitär-Einrichtung nach Anspruch 14, **dadurch gekennzeichnet, dass** der Benutzer-Identifikationssensor (37) durch die zentrale Datenverarbeitungseinheit (13) nach erfolgter Benutzer-Identifikation oder gemäß durch den betreffenden Benutzer selbst definierter Kriterien situationsabhängig in seine Blind-Konfiguration verstellt wird.

16. Sanitär-Einrichtung nach einem der Ansprüche 1 bis 15, **dadurch gekennzeichnet, dass** ein Zeitgeber vorgesehen ist, wobei ein durch diesen generiertes Zeitsignal der zentralen Datenverarbeitungseinheit (13) zuführbar ist und eine zeitspezifische Vorselektion der an der Benutzerschnittstelle (17) zur Auswahl angebotenen Wasserabgabe-Programme bewirkt.

17. Sanitär-Einrichtung nach einem der Ansprüche 1 bis 16, **dadurch gekennzeichnet, dass** die Steuereinheit (12) eine Datenkommunikationsschnittstelle (41) umfasst, insbesondere für die Eingabe von auf einem externen Gerät (40) erstellten Programmdaten.

18. Sanitär-Einrichtung nach einem der Ansprüche 1 bis 17, **dadurch gekennzeichnet, dass** stromabwärts der Dosier- und Mischventileinheit (5) ein Temperatursensor (14) vorgesehen ist, dessen Messwert einem Temperatur-Regelkreis der zentralen Datenverarbeitungseinheit (13) zugeführt wird.

19. Sanitär-Einrichtung nach einem der Ansprüche 1 bis 18, **dadurch gekennzeichnet, dass** die Sanitär-Einrichtung (2) einen Vorratsbehälter für ein Körperpflegeprodukt samt einer angeschlossenen, stromaufwärts des Wasserauslasses mündenden Dosier- und Abgabeeinrichtung umfasst, wobei die zentrale Datenverarbeitungseinheit (13) bei zumindest einem der Wasserabgabeprogramme die Dosier- und Abgabeeinrichtung betätigt.

## Claims

1. A sanitary facility (2) having a cold-water supply (3), a hot-water supply (4), at least one water outlet and a metering and mixing valve unit (5), which is suitable for influencing the total flow through the water outlet and the ratio of the partial quantity of cold water and the partial quantity of hot water relative to one another in the total flow, wherein a programmable electronic control unit (12) acts on the metering and mixing valve unit (5), with the following features:
- the electronic control unit (12) comprises a program memory (16) suitable for storage of several different water-delivery programs capable of being called and a central data-processing unit (13), which acts on at least one actuator for operation of the metering and mixing valve unit (5);
- a user interface (17) is provided that permits program selection as well as manual modification of the selected water-delivery program;
- the user interface (17) has a display (18), a setting-selector ring (19) extending around the display (18) and capable of being turned around an axis perpendicular to the display (18), with a circumferential gripping face (20) accessible from radially outside as well as at least three buttons (21);
**characterized by** the following features:
- the at least three buttons (21) are disposed around the setting-selector ring (19);
- the setting-selector ring (19) and/or the display (18) is axially movable for actuation of a momentary-contact confirmation switch (35);
- three of the at least three buttons (21) of the user interface (17) are designed in such a way as a program-selection button (23), as an output button (25) and as a temperature button (26) that, upon their actuation, a signal supplied by a rotary-position transducer (22) of the setting-selector-ring is processed in the central data-processing unit (13), depending on the actuated button (21), in the sense of a water-delivery program selection, an output modification within a called water-delivery program or a temperature modification within a called water-delivery program;
- the display (18) has a central display region (28) and a peripheral display region (29) surrounding it annularly;
- the peripheral display region (29) comprises at least three segments (30) associated spatially with the buttons (21) and respectively having a function-value status display (36) of the button function in question;
- upon button actuation, a display of the instantaneous setting value of the button function in question appears in the central display region (28).

2. The sanitary facility of claim 1, **characterized in that** by button actuation, the function-value status display (36) of the button function in question is extinguished in the associated segment (30) of the peripheral display region (29).

3. The sanitary facility of claim 1 or claim 2, **characterized in that** the segments (30) of the peripheral display region (29) change color to correspond to the set water-delivery temperature.

4. The sanitary facility of one of claims 1 to 3, **characterized in that** the temperature modification mode is activated, either by confirmation of a selection option and/or automatically at a predetermined time after the last actuation of the user interface (17).

5. The sanitary facility of one of claims 1 to 4, **characterized in that** the water flow through the water outlet or the total volume of water delivered through the water outlet can be adjusted by means of the output button (25).

6. The sanitary facility of one of claims 1 to 5, **characterized in that** a flow sensor (15) is provided downstream from the metering and mixing valve unit (5), and its measured value is supplied to a flow-regulating circuit of the central data-processing unit (13).

7. The sanitary facility of one of claims 1 to 4, the type or quality of the output water can be adjusted by means of the output **characterized in that** button (25).

8. The sanitary facility of one of claims 1 to 7, **characterized in that** the sanitary facility (2) has at least two water outlets and one distributing valve (6) for switching the water delivery between the water outlets, wherein the central data-processing unit (13) acts on at least one actuator operating the distributing valve (6) according to an outlet setting applied at the user interface (17).

9. The sanitary facility of claim 8, **characterized in that** the outlet setting takes place by means of the output button (25) or by means of a fourth button (21), which is designed as an outlet-selection button (24), of the user interface (17), with which a fourth segment (30) of the peripheral display region (29) of the display (18) of the user interface (17) is associated.

10. The sanitary facility of claim 8 or claim 9, **characterized in that** at least one of the at least two water outlets can be used in hand-held manner, wherein an in-use sensor associated with that water outlet generates an in-use signal to be supplied to the central data-processing unit (13).

11. The sanitary facility of one of claims 1 to 7, **characterized in that** the sanitary facility is a washing stand, wherein the filling volume or the basin level can be adjusted by means of a fourth button (21), with which a fourth segment (30) of the peripheral display region (29) of the display (18) of the user interface (17) is associated, and by means of the setting-selector ring (19) of the user interface (17).

12. The sanitary facility of one of claims 1 to 11, **characterized in that** a modification memory is provided that stores the modifications made individually to the called water-delivery program.

13. The sanitary facility of one of claims 1 to 12, **characterized in that** an identification sensor (37) is provided, wherein a user-identification signal generated thereby can be supplied to the central data-processing unit (13) to bring about a person-specific preselection of the water-delivery programs offered for selection to the user interface (17).

14. The sanitary facility of claim 13, **characterized in that** the user-identification sensor (37) can be adjusted between a sensing configuration and a blind configuration that can be physically distinguished therefrom.

15. The sanitary facility of claim 14, **characterized in that** the user identification sensor (37) will be adjusted to its blind configuration by the central data-processing unit (13) after user identification has been established or in situation-based manner according to criteria defined by the user in question himself or herself.

16. The sanitary facility of one of claims 1 to 15, **characterized in that** a timer is provided, wherein a time signal generated thereby can be supplied to the central data-processing unit (13) to bring about a time-specific preselection of the water-delivery programs offered for selection to the user interface (17).

17. The sanitary facility of one of claims 1 to 16, **characterized in that** the control unit (12) comprises a data-communication interface (41), especially for inputting program data created on an external device (40).

18. The sanitary facility of one of claims 1 to 17, **characterized in that** a temperature sensor (14) is provided downstream from the metering and mixing valve unit (5), and its measured value is supplied to a temperature-regulating circuit of the central data-processing unit (13).

19. The sanitary facility of one of claims 1 to 18, **characterized in that** the sanitary facility (2) comprises a reservoir container for a body-care product plus a connected metering and dispensing device that discharges upstream from the water outlet, wherein the central data-processing unit (13) actuates the metering and dispensing device for at least one of the water-delivery programs.

## Revendications

1. Dispositif sanitaire (2), pourvu d'une arrivée d'eau froide (3), d'une arrivée d'eau chaude (4), d'au moins une sortie d'eau et d'une unité doseuse et mélangeuse (5), laquelle est adaptée pour influencer le débit total à travers la sortie d'eau et le rapport de la quantité partielle d'eau froide à la quantité partielle d'eau chaude, une unité de commande (12) électronique programmable agissant sur l'unité doseuse et mélangeuse (5), présentant les attributs suivants :
- l'unité de commande (12) électronique comprend une mémoire de programme (16) adaptée pour la sauvegarde interrogeable de plusieurs programmes différents de distribution d'eau et une unité centrale de traitement de données (13), laquelle agit sur au moins un actionneur actionnant l'unité doseuse et mélangeuse (5) ;
- il est prévu une interface utilisateur (17) permettant la sélection de programme, ainsi que la modification manuelle du programme de distribution d'eau sélectionné ;
- l'interface utilisateur (17) comporte un écran (18), une bague de réglage (19) s'étendant autour de l'écran (18), susceptible d'être tournée autour d'un axe perpendiculaire à l'écran (18), pourvue d'une surface de préhension (20) circonférentielle, accessible par l'extérieur en direction radiale et au moins trois boutons (21) ;
**caractérisé par** les attributs suivants :
- les au moins trois boutons (21) sont placés autour de la bague de réglage (19) ;
- la bague de réglage (19) et / ou l'écran (18) est déplaçable en direction axiale, pour l'actionnement d'une touche d'actionnement (35) ;
- trois des au moins trois boutons (21) de l'interface utilisateur (17) sont réalisés sous la forme de bouton sélecteur de programme (23), de bouton de distribution (25) et de bouton de température (26), de manière à ce que par leur actionnement, un signal mis à disposition par un capteur de rotation (22) de bague de réglage soit traité dans l'unité centrale de traitement de données (13), en fonction du bouton (21) actionné, dans le sens d'une sélection de programme de distribution d'eau, d'une modification de la distribution au sein d'un programme de distribution d'eau interrogé ou d'une modification de la température au sein d'un programme de distribution d'eau interrogé ;
- l'écran (18) dispose d'un champ d'affichage (28) centralisé et d'un champ d'affichage (29) périphérique entourant celui-ci sous forme annulaire ;
- le champ d'affichage (29) périphérique comprend au moins trois segments (30) associés dans l'espace aux boutons (21), dont chacun est pourvu d'un affichage d'état (36) de valeur fonctionnelle de la fonction du bouton concerné ;
- un actionnement du bouton déclenche un affichage de la valeur de réglage momentanée de la fonction du bouton concerné dans le champ d'affichage (28) centralisé.

2. Dispositif sanitaire selon la revendication 1, **caractérisé en ce qu'**un actionnement du bouton a pour effet d'effacer l'affichage d'état (36) de valeur fonctionnelle de la fonction du bouton concerné dans le segment (30) associé du champ d'affichage (29) périphérique.

3. Dispositif sanitaire selon la revendication 1 ou la revendication 2, **caractérisé en ce que** les segments (30) du champ d'affichage (29) périphérique changent de couleur en fonction de la température réglée pour la distribution d'eau.

4. Dispositif sanitaire selon l'une quelconque des revendications 1 à 3, **caractérisé en ce que** le mode de modification de la température s'active automatiquement suite à la confirmation d'une option de sélection et / ou un temps prédéfini après le dernier actionnement de l'interface utilisateur (17).

5. Dispositif sanitaire selon l'une quelconque des revendications 1 à 4, **caractérisé en ce que** le débit d'eau à travers la sortie d'eau ou la quantité totale d'eau distribuée à travers la sortie d'eau est ajustable au moyen du bouton de distribution (25).

6. Dispositif sanitaire selon l'une quelconque des revendications 1 à 5, **caractérisé en ce qu'**en aval de l'unité doseuse et mélangeuse (5) est prévu un débitmètre (15), dont la valeur mesurée est amenée vers un circuit de réglage du débit de l'unité centrale de traitement de données (13).

7. Dispositif sanitaire selon l'une quelconque des revendications 1 à 4, **caractérisé en ce que** la nature ou la qualité de l'eau distribuée et ajustable au moyen du bouton de distribution (25).

8. Dispositif sanitaire selon l'une quelconque des revendications 1 à 7, **caractérisé en ce que** le dispositif sanitaire (2) comporte au moins deux sorties d'eau et une vanne de répartition (6), permettant de permuter la distribution d'eau entre les sorties d'eau, l'unité centrale de traitement de données (13) agissant sur au moins un actionneur actionnant la vanne de répartition (6), conformément à un réglage de sortie auquel il a été procédé sur l'interface utilisateur (17).

9. Dispositif sanitaire selon la revendication 8, **caractérisé en ce que** le réglage de la sortie s'effectue par l'intermédiaire du bouton de distribution (25) ou par l'intermédiaire d'un quatrième bouton (21) de l'interface utilisateur (17), réalisé sous la forme d'un bouton de sélection (24) de sortie, auquel est associé un quatrième segment (30) du champ d'affichage (29) périphérique de l'écran (18) de l'interface utilisateur (17).

10. Dispositif sanitaire selon la revendication 8 ou la revendication 9, **caractérisé en ce qu'**au moins l'une des au moins deux sorties d'eau est utilisable manuellement, un capteur d'utilisation associé à ladite sortie d'eau générant un signal d'utilisation pouvant être amené à l'unité centrale de traitement de données (13).

11. Dispositif sanitaire selon l'une quelconque des revendications 1 à 7, **caractérisé en ce que** le dispositif sanitaire est un plan de toilette, la quantité de remplissage ou la hauteur de la vasque étant ajustable par l'intermédiaire d'un quatrième bouton (21), réalisé sous la forme d'un bouton de remplissage ou d'un bouton de hauteur de vasque auquel est associé un quatrième segment (30) du champ d'affichage (29) périphérique de l'écran (18) de l'interface utilisateur (17) et de la bague de réglage (19) de l'interface utilisateur (17).

12. Dispositif sanitaire selon l'une quelconque des revendications 1 à 11, **caractérisé en ce qu'**il est prévu une mémoire de modifications, mémorisant la modification à laquelle il a été procédé individuellement du programme de distribution d'eau interrogé.

13. Dispositif sanitaire selon l'une quelconque des revendications 1 à 12, **caractérisé en ce qu'**il est prévu un capteur (37) d'identifiant utilisateur, un signal d'identifiant utilisateur généré par celui-ci pouvant être amené à l'unité centrale de traitement de données (13) et initiant une présélection spécifique à la personne du programme de distribution d'eau proposé à la sélection sur l'interface utilisateur (17).

14. Dispositif sanitaire selon la revendication 13, **caractérisé en ce que** le capteur (37) d'identifiant utilisateur est ajustable entre une configuration de détection et une configuration aveugle physiquement distinguible de celle-ci.

15. Dispositif sanitaire selon la revendication 14, **caractérisé en ce que** le capteur (37) d'identifiant utilisateur est ajusté dans sa configuration aveugle par l'unité de traitement de données (13), une fois que l'identification de l'utilisateur a été effectuée ou conformément à des critères définis par l'utilisateur concerné.

16. Dispositif sanitaire selon l'une quelconque des revendications 1 à 15, **caractérisé en ce qu'**il est prévu un minuteur, un signal de temps généré par celui-ci pouvant être amené à l'unité centrale de traitement de données (13) et initiant une présélection spécifique au temps des programmes de distribution d'eau proposés à la sélection sur l'interface utilisateur (17).

17. Dispositif sanitaire selon l'une quelconque des revendications 1 à 16, **caractérisé en ce que** l'unité de commande (12) comprend une interface (41) de communication de données, destinée notamment à la saisie de données de programme établies par un appareil (40) externe.

18. Dispositif sanitaire selon l'une quelconque des revendications 1 à 17, **caractérisé en ce qu'**en aval de l'unité doseuse et mélangeuse (5) est prévu un capteur de température (14), dont la valeur mesurée est amenée à un circuit de réglage de la température de l'unité centrale de traitement de données (13).

19. Dispositif sanitaire selon l'une quelconque des revendications 1 à 18, **caractérisé en ce que** le dispositif sanitaire (2) comprend un bac de réserve pour un produit de soin corporel avec un dispositif doseur et distributeur raccordé, débouchant en amont de la sortie d'eau, l'unité centrale de traitement de données (13) actionnant le dispositif doseur et distributeur dans le cadre d'au moins l'un des programmes de distribution d'eau.
